(19) Europäisches Patentamt
European Patent Office
Office européen des brevets

(11) **EP 1 517 821 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(21) Anmeldenummer: **03735255.6**

(22) Anmeldetag: **24.03.2003**

(51) Int Cl.:
***B60T 8/00*** *(2006.01)*

(86) Internationale Anmeldenummer:
**PCT/DE2003/000960**

(87) Internationale Veröffentlichungsnummer:
**WO 2004/000619 (31.12.2003 Gazette 2004/01)**

(54) **VERFAHREN UND VORRICHTUNG ZUR BREMSENREGELUNG BEI EINEM FAHRZEUG WÄHREND EINES ANFAHRVORGANGS**

METHOD AND DEVICE FOR BRAKE CONTROL IN A VEHICLE DURING THE STARTING PROCESS

PROCEDE ET DISPOSITIF DE REGULATION DES FREINS D'UN VEHICULE LORS D'UN PROCESSUS DE DEMARRAGE

(84) Benannte Vertragsstaaten:
**DE FR SE**

(30) Priorität: **20.06.2002 DE 10227520**

(43) Veröffentlichungstag der Anmeldung:
**30.03.2005 Patentblatt 2005/13**

(73) Patentinhaber: **ROBERT BOSCH GMBH**
**70442 Stuttgart (DE)**

(72) Erfinder: **SAUTER, Thomas**
**71686 Remseck (DE)**

(56) Entgegenhaltungen:
DE-A- 10 053 608    DE-A- 19 849 407
DE-A- 19 909 326    DE-A- 19 916 096
DE-A- 19 933 085    DE-A- 19 950 477
DE-C- 4 418 771

• PATENT ABSTRACTS OF JAPAN vol. 2002, no. 09, 4. September 2002 (2002-09-04) & JP 2002 145034 A (ROBERT BOSCH GMBH), 22. Mai 2002 (2002-05-22)

**Beschreibung**

Stand der Technik

Die Erfindung betrifft ein Verfahren und eine Vorrichtung zur Bremsenregelung.

Beim Anfahren an einem in Fahrrichtung aufwärts geneigten Hang (Steigungshügel) kann ein Fahrer aufgrund seiner Erfahrung oft einschätzen, welches Motormoment er mit seinem Fahrpedal einstellen muss, um anfahren zu können.

Wenn an dieser Steigung jedoch zwischen linker und rechter Fahrzeugseite unterschiedliche Reibwerte vorliegen (μ-Split-Steigungshügel), dann ist das Anfahren mit einem Fahrzeug ohne Traktionshilfe bei entsprechender Steigung kaum möglich, da das Rad auf dem niedrigen Reibwert durchdreht. Abhängig von der Steigung kann das Fahrzeug am Hang sogar zurückrollen.

Beim Anfahren am μ-Split-Steigungshügel mit Traktionshilfe (z.B. ASR) muss der Fahrer ein höheres Motormoment einstellen, um losfahren zu können. Das durchdrehende Rad auf der Niedrig-μ-Seite wird durch ASR (ASR = Antriebsschlupfregelung) über den Bremseneingriff abgebremst und ein Antriebsmoment in Höhe des Bremsmoments wird auf das sich auf Hochreibwert befindliche Rad übertragen und ermöglicht somit den Vortrieb des Fahrzeugs. Diese Übertragung des Antriebsmoments ist ein Effekt der Kopplung der Räder über ein Differential. Das erforderliche Bremsmoment (Sperrmoment) auf der Niedrig-μ-Seite muss über die Fahrervorgabe als zusätzliches Motormoment aufgebracht werden.

Da dem Fahrer diese physikalischen Zusammenhänge beim Anfahren am μ-Split-Steigungshügel häufig nicht gegenwärtig sind, verlässt er sich auf seine Intuition und stellt ein zu geringes Motormoment ein. Er erhöht dann, wenn er bemerkt, dass sich das Fahrzeug nicht in Bewegung setzt, erst nach und nach das Moment, bis sich das Fahrzeug in Bewegung setzt.

Ist das eingestellte Antriebsmoment so gering, dass des Rad auf der Niedrig-μ-Seite nicht sofort mit großem Schlupf läuft, erfolgt der Druckaufbau zögerlich mit der Folge dass das Fahrzeug anfängt, rückwärts zu rollen. Um das Zurückrollen zu unterbinden, muss der Fahrer schnell mehr Gas geben, um das Antriebsmoment und in der Folge (über den ASR-Bremseneingriff) das Sperrmoment zu erhöhen. Diese Reaktion ist allerdings für den Fahrer unnatürlich und anstatt mehr Gas zu geben, erschrickt er, betätigt die Bremse und bricht den Anfahrvorgang ab.

Das Rückrollen kann auch dann erfolgen, wenn das Bremsmoment (Sperrmoment) aufgrund von Radschwingungen verzögert aufgebaut wird. Auch bei tiefen Temperaturen erfolgt der Bremsdruckaufbau häufig nicht hinreichend schnell, so dass es auch hier zum Zurückrollen das Fahrzeugs kommen kann.

Aus der JP 2002 145034 A sowie der zur selben Patentfamilie gehörenden DE 100 53 608 A1 sind eine Antriebsschlupfregelung für ein Fahrzeug bekannt, welches zumindest eine Achse aufweist, der zwei angetriebene Räder zugeordnet sind und wobei die Antriebsschlupfregeleinrichtung beim Auftreten einer Durchdrehneigung an einem der angetriebenen Räder der Achse das kinematische Verhalten des zum Durchdrehen neigenden Rades durch den Aufbau eines ersten Radbremsdrucks derart regelt, dass das zum Durchdrehen neigende Rad der Achse in einem zulässigen Schlupfbereich verbleibt. Dabei ist vorgesehen, dass zur Reduzierung von durch den ersten Radbremsdruck verursachten Störmomenten für ein nicht zum Durchdrehen neigendes Rad der Achse ein zweiter Radbremsdruck aufgebaut wird, der unabhängig vom ersten Radbremsdruck einstellbar ist.

In der DE 199 33 085 A1 werden ein Verfahren und eine Vorrichtung zur Antriebsschlupfregelung vorgeschlagen, welche in einem ersten Betriebsmodus bei Durchdrehneigung eines Antriebsrades in die Radbremsen dieses Antriebsrades eingreift, in einem zweiten Betriebsmodus bei Durchdrehneigung an beiden Antriebsrädern einer Achse das Antriebsmoment des Fahrzeugs reduziert. Die Reduzierung wird verhindert bzw. begrenzt, wenn sich das Fahrzeug auf einer Fahrbahn mit unterschiedlichen Reibwerten an den Antriebsrädern befindet, auf der die Instabilität des zweiten Rades nur kurzzeitig ist.

Aus der DE 199 09 326 A1 sind ein Verfahren und eine Vorrichtung zum Steuern der Fahrgeschwindigkeit eines Kraftfahrzeugs bekannt. Dieses hat ein Fahrpedal, das entgegen seiner Betätigungsrichtung in eine Ruhestellung vorgespannt ist. Um die Vorrichtung komfortabler zu gestalten, ist eine Einrichtung zum Erkennen der Ruhestellung des Fahrpedals vorgesehen, die mit einem Bremskrafterzeuger verbunden ist und die in der Ruhestellung des Fahrpedals den Bremskrafterzeuger veranlasst, eine vorab festgelegte Bremskraft bereitzustellen.

Vorteile der Erfindung

Die Erfindung betrifft ein Verfahren zur Bremsenregelung bei einem Fahrzeug während eines Anfahrvorgangs auf einer μ-Split-Fahrbahn, bei dem

-   das Vorliegen eines Anfahrvorgangs auf einer μ-Split-Fahrbahn mit einer Hochreibwertseite und Niedrigreibwertseite erkannt und

- als Folge davon an einem angetriebenen Rad auf der Hochreibwertseite des Fahrzeugs der Bremsdruck erhöht wird.

Der Vorteil der Erfindung besteht darin, dass mit einfachen Mitteln, nämlich einer Bremsdruckerhöhung an einem angetriebenen Rad auf der Hochreibwertseite des Fahrzeugs, der Anfahrvorgang insbesondere für den ungeübten Fahrer wesentlich erleichtert wird. Die Erfindung ist ohne wesentlichen Aufwand, insbesondere ohne jeden Aufwand an Sensorik, in einem Steuergerät für die Antriebsschlupfregelung (ASR) implementierbar.

Die Erfindung ist dadurch gekennzeichnet, dass der Abbau des erhöhten Bremsdrucks davon abhängt, ob die $\mu$-Split-Fahrbahn in Fahrzeuglängsrichtung ansteigt, d.h. ob ein $\mu$-Split-Steigungshügel vorliegt. Damit kann sichergestellt werden, dass bei einer ebenen oder nur schwach geneigten Fahrbahn der Bremsdruck schneller reduziert wird. Dies wirkt sich positiv auf den Fahrkomfort aus.

Eine vorteilhafte Ausgestaltung ist dadurch gekennzeichnet, dass

- der zeitliche Abstand zwischen der Betätigung des Fahrpedals durch den Fahrer zur Initiierung des Anfahrvorgangs und dem Bewegungsbeginn des Fahrzeugs ermittelt wird und
- der spätere Abbau des erhöhten Bremsdrucks abhängig vom ermittelten zeitlichen Abstand erfolgt.

Dieser zeitliche Abstand ist ein einfaches Maß dafür, ob der Anfahrvorgang auf einer ebenen Fahrbahn oder auf einer geneigten Fahrbahn erfolgt.

Die Erfindung ist weiterhin dadurch gekennzeichnet, dass der Bremsdruck

- um einen ersten konstanten Wert erhöht wird, wenn die Feststellbremse vom Fahrer nicht betätigt ist und
- zusätzlich um einen zweiten konstanten Wert erhöht wird, wenn die Feststellbremse vom Fahrer betätigt ist.

Wenn der Fahrer die Feststellbremse während des Abfahrvorgangs betätigt, dann kann mit großer Wahrscheinlichkeit davon ausgegangen werden, dass ein Anfahrvorgang am Berg vorliegt. Deshalb ist es sinnvoll, bei einer als betätigt erkannten Feststellbremse den Bremsdruck nochmals um einen weiteren Wert zu erhöhen.

Die Vorrichtung zur Bremsensteuerung bei einem Fahrzeug während eines Anfahrvorgangs auf einer $\mu$-Split-Fahrbahn umfasst

- Erkennungsmittel zum Erkennen des Vorliegens eines Anfahrvorgangs auf einer $\mu$-Split-Fahrbahn mit einer Hochreibwertseite und Niedrigreibwertseite und
- Bremsdruckerhöhungsmittel zur Erhöhung des Bremsdrucks an einem angetriebenen Rad auf der Hochreibwertseite des Fahrzeugs als Folge eines durch die Erkennungsmittel erkannten Vorliegens eines Anfahrvorgangs auf einer $\mu$-Split-Fahrbahn mit einer Hochreibwertseite und Niedrigreibwertseite.

Weitere vorteilhafte Ausgestaltungen der Erfindung sind den Unteransprüchen zu entnehmen.

Zeichnung

Die Zeichnung besteht aus den Figuren 1 bis 3.

In Fig. 1 sind ein Fahrzeug sowie die an einem Steigungshügel darauf wirkenden Kräfte dargestellt.

Fig. 2 zeigt den prinzipiellen Ablauf des erfindungsgemäßen Verfahrens.

Fig. 3 zeigt den prinzipiellen Aufbau der erfindungsgemäßen Vorrichtung.

Ausführungsbeispiele

Um ein Zurückrollen beim Anfahren am $\mu$-Split-Steigungshügel zu verhindern, wird durch die Erfindung beim Erkennen einer $\mu$-Split-Fahrbahn nicht nur am durchdrehenden Antriebsrad aktiv Bremsdruck aufgebaut (so wie es die ASR-Regelung vorsieht), sondern es wird auch das auf dem Hochreibwert stehende Antriebsrad (obwohl es keine Regelabweichung, d.h. keinen übermäßigen Radschlupf, aufweist) vorsorglich mit Bremsdruck beaufschlagt. Die Vorgehensweise erfolgt in drei Schritten:

Schritt 1: Erkennung eines $\mu$-Split-Steigungshügels
Schritt 2: Berechnung des erforderlichen Bremsdrucks am high-$\mu$-Rad
Schritt 3: Gesteuerter Druckabbau am high-$\mu$-Rad

Im folgenden werden die einzelnen Schritte detailliert dargestellt.

Schritt 1: Erkennung eines μ-Split-Steigungshügels

Ein μ-Split-Steigungshügel wird erkannt, wenn folgende Bedingungen erfüllt sind:

1. Das Fahrervorgabewert für das Motormoment (MAF) übersteigt einen Grenzwert MaMueSplit.
2. Es liegt eine "select-high-Regelung" sowie eine einseitige Regelabweichung mit schnellem Bremsdruckaufbau vor.
3. Es liegt ein hoher einseitiger Schlupf vor.
4. Das Differenzbremsmoment M_Diff zwischen dem rechten und dem linken angetriebenen Rad übersteigt einen Grenzwert MbremsMueSplit.
5. Es liegt ein Anfahrvorgang vor.

Bei der "select-high-Regelung" werden die Schlupfschwellen der Antriebsmomentenregelung (Motoreingriff) unempfindlich geschaltet. Das bedeutet, dass der Motor bewusst gegen die Bremse arbeitet, um Vortrieb zu erzielen.
Wenn alle diese Bedingungen erfüllt sind, erfolgt die Berechnung des erforderlichen Bremsdrucks P_HighRad für das Rad auf der μ-High-Seite (= Hochreibwertseite), um ein Zurückrollen des Fahrzeugs zu verhindern.
Je größer die Steigung ist, um so größer ist die Wahrscheinlichkeit, dass ein Fahrer zum Anfahren die Handbremse benutzt. Deshalb kann häufig vom Vorliegen einer Steigung ausgegangen werden, wenn der Fahrer zum Anfahren die Handbremse benutzt.
Deshalb wird, wenn die oben genannten Bedingungen erfüllt sind und der Fahrer zusätzlich zum Anfahren die Handbremse benutzt, der berechnete Bremsdruck P_HighRad für das Rad, welches sich auf der μ-High-Seite (auch als "μ-High-Rad" bezeichnet) befindet, zusätzlich um einen Offsetwert P_HasOffset erhöht, d.h. es gilt

$$\text{P\_HighRad} = \text{P\_HighRad} + \text{P\_HasOffset}.$$

Schritt 2: Berechnung des erforderlichen Bremsdrucks am high-μ-Rad

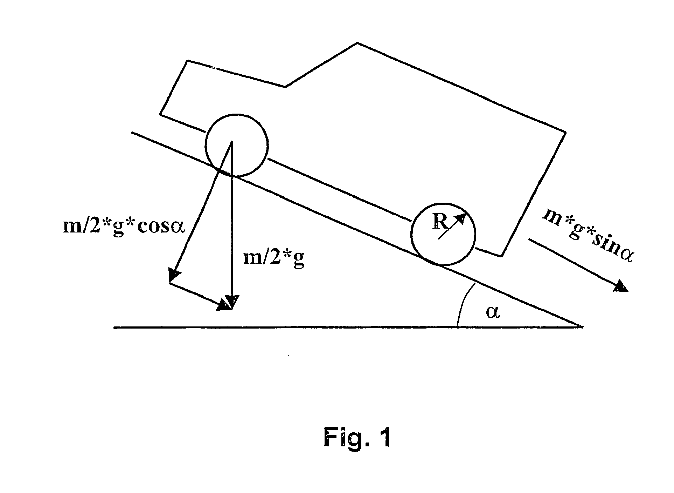

Im Folgenden wird die Berechnung des erforderlichen Bremsdrucks P_HighRad dargestellt. Eine anschauliche Skizze dazu ist in Fig. 1 dargestellt, diese zeigt die auf die Räder der angetriebenen Achse (im Bild ist das die Vorderachse) wirkende Gewichtskraft m*g/2 sowie deren Komponente m*g/2*cosα (das ist die Normalkraft, welche senkrecht auf die Fahrbahn wirkt) und die Hangabtriebskraft m*g*sinα.
Dazu wird zuerst das Hangabtriebsmoment MWS ermittelt:

$$\text{MWS} = m * g * R * \sin\alpha .$$

Dabei sind
M = Fahrzeugmasse in kg,
g = Erdbeschleunigunskonstante (9.81 m/s$^2$)
sinα = Sinus des Steigungswinkels
R = Radradius
Das maximal übertragbare Moment Muebertragbar wird durch den Reibwert bestimmt. Für einachsig angetriebene Fahrzeuge gilt

$$\text{Muebertragbar} = \mu * m/2 * g * R * \cos\alpha .$$

Dabei sind
μ = Reibbeiwert
m/2 = halbe Fahrzeugmasse, da nur eine der beiden Achsen angetrieben ist (Heck- oder Frontantrieb). Dabei wird eine auf Vorderachse- und Hinterachse gleichverteilte Fahrzeugmasse vorausgesetzt.
Um in Abhängigkeit vom Reibbeiwert die maximal mögliche Steigung bestimmen zu können, müssen die beiden Gleichungen gleichgesetzt werden:

MWS = Muebertragbar bzw.

$$m * g * \sin\alpha * R = \mu * m/2 * g * R * \cos\alpha \quad .$$

Damit ergibt sich

$$\tan\alpha = \mu/2 \quad .$$

Betrachtet man typische $\mu$-Split-Verhältnisse, so liegt beispielsweise der Reibbeiwert auf der $\mu$-Low-Seite bei ca. 0.2 (Eis) und auf der $\mu$-High-Seite bei ca. 0.8...1. Für das Anfahren eines Fahrzeugs in der Steigung ist allerdings die $\mu$-Low-Seite ausschlaggebend. Bei einem angenommenen Reibbeiwert $\mu$=0.2 ergibt sich ein Winkel $\alpha = \arctan(0.1) = 5.7^0$. Dies entspricht einer Steigung von ca. 10% (10% Steigung entsprechen einem $\arctan(0.1)$ und damit ergibt sich $\alpha = \arctan(0.1) = 5.7^0$).

Das bedeutet, dass bei einem Reibbeiwert von 0.2 theoretisch ein Anfahren bis zu 10% Steigung möglich ist. Dies setzt allerdings voraus, dass der Fahrer auf Anhieb das erforderliche Motormoment einstellt. Auch ein sehr kleines Überschussmoment führt zum Durchdrehen des $\mu$-Low-Rades und der Reibbeiwert verringert sich zusätzlich beim Übergang von Haftreibung zu Gleitreibung mit der Folge, dass das Fahrzeug rückwärts rollt.

Im Folgenden sei als anschauliches Rechenbeispiel ein Fahrzeug der Masse m = 1500 kg betrachtet. Der Raddurchmesser sei 0.6m. Weiterhin liege ein $\mu$-Split-Steigungshügel mit einer Steigung von 15% (damit ist $\alpha = \arctan(0.15) = 8.5^0$) vor. Die Reibwertpaarung sei 0.2/1.0, d.h. auf der Niedrig-$\mu$-Seite ist $\mu$ = 0.2 und auf der Hoch-$\mu$-Seite ist $\mu$ = 1.0. Für die Hangabtriebskraft MWS ergibt sich

$$MWS = 1500kg * 9.81m/s^2 * \sin(8.5) * 0.3m = 650 \; Nm \; .$$

Das übertragbare Moment ergibt sich zu

$$Muebertragbar = 0.2*750kg*9.81m/s^2 *0.3m*\cos(8.5^0) = 440Nm$$

Damit ergibt sich einen Differenz von 210 Nm.

Durch Aufbringen eines Bremsmoments am $\mu$-Low-Rad kann jedoch über das Differential das übertragbare Moment am $\mu$-High-Rad erhöht werden.

Die Differenz in Höhe von Mdelta = 210 Nm muss deshalb als zusätzliches Bremsmoment aufgebracht werden. Das Bremsmoment, das über die Antriebsachse aufgebracht werden soll, verteilt sich jeweils zur Hälfte auf die beiden Antriebsräder.

Die zusätzlichen Bremsmomente für die $\mu$-Low-Seite und die $\mu$-High-Seite ergeben sich deshalb zu

$$MbremsZusLowRad = Mdelta/2 = 105 \; Nm$$

und

$$MbremsZusHighRad = Mdelta/2 = 105 \; Nm.$$

Da bei einem Anfahrvorgang am Steigungshügel das schlupfende $\mu$-Low-Rad sowieso mit hohem Bremsdruck beaufschlagt wird, muss nur am $\mu$-High-Rad das zusätzliche Bremsmoment Mbrems-ZusHighRad aufgebracht werden.

Der Zusammenhang zwischen Bremsdruck und Bremsmoment bestimmt sich gemäß

$$Mbrems[Nm] = C[Nm/bar]*pBrems[bar].$$

In der eckigen Klammer [] sind dabei jeweils die physikalischen Einheiten der Größen angegeben. Nimmt die Konstante C beispielsweise den Wert 12.5 Nm/bar an, dann ergibt sich damit der folgende Bremsdruck pHighRad am High-$\mu$-Rad:

$$\texttt{pHighRad = MbremsZusHighRad/C = 8.4 bar.}$$

Die Auslegung der Parameter in einem Fahrzeug kann beispielsweise so erfolgen, dass bei einem erkannten $\mu$-Split-Steigungshügel ein Bremsdruck für 15% Steigung in die dem High-$\mu$-Rad zugeordnete Bremse eingespeist wird. In Verbindung mit einem Handbremsschalter wird diesem berechneten Wert ein Offsetwert in Höhe von beispielsweise 5 bar dazuaddiert.

Schritt 3: Gesteuerter Druckabbau:

Der Druckaufbau nach der $\mu$-Split-Erkennung erfolgt im ersten Ansatz immer so, als wäre das Fahrzeug am Steigungshügel. Ob die Steigung beispielsweise 10% oder 20% beträgt, ist nicht relevant, da in jedem Fall der Hangabtriebskraft entgegengewirkt werden muss.
Anders liegt der Fall beim Auftreten einer ebenen $\mu$-Split-Fahrbahn (keine Steigung). Ein eingesteuerter Bremsdruck von beispielsweise 10 bar mindert den Vortrieb zwar nur unwesentlich, ist aber für den Fahrer spürbar. Aus diesem Grund sollte ein adaptiver Druckabbau erfolgen. Die Abbaurate des Drucks (d.h. die Änderung des Drucks pro Zeiteinheit) erfolgt abhängig von der Gewissheit über den Zustand. Insbesondere erfolgt

- ein schneller Druckabbau bei Auftreten einer $\mu$-Split-Fahrbahn in der Ebene und

- ein gestaffelter Druckabbau bei Auftreten eines $\mu$-Split-Steigungshügels.

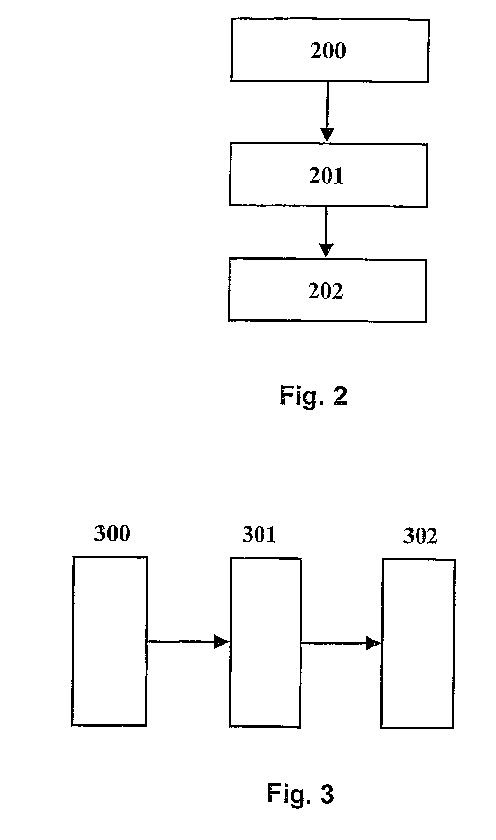

Bei der $\mu$-Split-Regelung können über das zeitliche Verhalten der Regelung bzw. der Fahrzeugreaktion Rückschlüsse gezogen werden. Tritt der Fahrer bei Vorliegen einer ebenen $\mu$-Split-Fahrbahn auf das Fahrpedal, dann erfolgt die Reaktion des Fahrzeuges sehr schnell. Die Zeitspanne zwischen der Betätigung des Fahrpedals und dem Bewegungsbeginn des Fahrzeugs ist im allgemeinen kleiner als eine Sekunde. Am Steigungshügel erfolgt der Bewegungsbeginn des Fahrzeugs jedoch meist - nach Zeiten zwischen 2.5 und 4 Sekunden.
Deshalb bietet es sich an, den Druckabbau augenblicklich durchzuführen, wenn sich das Fahrzeug innerhalb einer Sekunde nach der einer $\mu$-Split-Erkennung und der Bremsdruckeinsteuerung in Bewegung setzt. Ansonsten erfolgt der Abbau, sobald die Raddrehzahl des $\mu$-Low-Rades sich wieder verringert, d.h. sobald die Radbeschleunigung negativ wird. Dieser Druckabbau erfolgt über eine Druckabbaurampe, deren Gradient (Steilheit) einstellbar ist.
Der prinzipielle Ablauf des Verfahrens ist in Fig. 2 dargestellt. Dabei wird in Block 200 ermittelt, ob ein Anfahrvorgang auf einer $\mu$-Split-Fahrbahn vorliegt. Anschließend wird zu Block 201 weitergegangen. Dort erfolgt die Erhöhung des Bremsdrucks am High-$\mu$-Rad. Anschließend wird zu Block 202 weitergegangen, dort erfolgt gesteuerte Druckabbau am High-$\mu$-Rad.
In Fig. 3 ist der prinzipielle Aufbau der erfindungsgemäßen Vorrichtung dargestellt. Dabei enthält Block 300 Sensormittel, welche beispielsweise die Stellung des Fahrpedals, die Stellung der Feststellbremse, usw. erfassen. Die Ausgangssignale dieser Sensormittel werden an die Erkennungsmittel 301 weitergeleitet. Dort wird erkannt, ob ein Anfahrvorgang auf einer $\mu$-Split-Fahrbahn vorliegt. Die Ausgangssignale von Block 301 werden an die Bremsdruckerhöhungsmittel 302 weitergeleitet. Durch diese Bremsdruckerhöhungsmittel wird gegebenenfalls die Erhöhung des Bremsdrucks am High-$\mu$-Rad durchgeführt.

**Patentansprüche**

1. Verfahren zur Bremsenregelung bei einem Fahrzeug während eines Anfahrvorgangs auf einer $\mu$-Split-Fahrbahn, bei dem

- das Vorliegen eines Anfahrvorgangs auf einer $\mu$-Split-Fahrbahn mit einer Hochreibwertseite und Niedrigreibwertseite erkannt (200) und
- als Folge davon an einem angetriebenen Rad auf der Hochreibwertseite des Fahrzeugs der Bremsdruck (P_Highrad) erhöht wird (201),

**dadurch gekennzeichnet, dass** der Bremsdruck

- um einen ersten konstanten Wert (P_Highrad) erhöht wird, wenn die Feststellbremse vom Fahrer nicht betätigt ist und
- zusätzlich um einen zweiten konstanten Wert (P_HasOffset) erhöht wird, wenn die Feststellbremse vom Fahrer betätigt ist und

dass der spätere Abbau des erhöhten Bremsdrucks (P_Highrad) davon abhängt, ob die µ-Split-Fahrbahn in Fahrzeuglängsrichtung aufwärts geneigt (α) ist.

**2.** Verfahren nach Anspruch 1, **dadurch gekennzeichnet, dass**

- der zeitliche Abstand zwischen der Betätigung des Fahrpedals durch den Fahrer zur Initiierung des Anfahrvorgangs und dem Bewegungsbeginn des Fahrzeugs ermittelt wird und
- der spätere Abbau des erhöhten Bremsdrucks abhängig vom ermittelten zeitlichen Abstand erfolgt.

**3.** Vorrichtung zur Bremsenregelung bei einem Fahrzeug während eines Anfahrvorgangs auf einer µ-Split-Fahrbahn, welche

- Erkennungsmittel (301), die zum Erkennen des Vorliegens eines Anfahrvorgangs auf einer µ-Split-Fahrbahn mit einer Hochreibwertseite und Niedrigreibwertseite ausgebildet sind und
- Bremsdruckerhöhungsmittel (302), die zur Erhöhung des Bremsdrucks an einem angetriebenen Rad auf der Hochreibwertseite des Fahrzeugs als Folge eines durch die Erkennungsmittel erkannten Vorliegens eines Anfahrvorgangs auf einer µ-Split-Fahrbahn mit einer Hochreibwertseite und Niedrigreibwertseite ausgebildet sind, enthält, **dadurch gekennzeichnet, dass** der Bremsdruck
- um einen ersten konstanten Wert (P_Highrad) erhöht wird, wenn die Feststellbremse vom Fahrer nicht betätigt ist und
- zusätzlich um einen zweiten konstanten Wert (P_HasOffset) erhöht wird, wenn die Feststellbremse vom Fahrer betätigt ist und

dass der spätere Abbau des erhöhten Bremsdrucks (P_Highrad) davon abhängt, ob die µ-Split-Fahrbahn in Fahrzeuglängsrichtung aufwärts geneigt (α) ist.

**4.** Vorrichtung nach Anspruch 3, **dadurch gekennzeichnet, dass**

- der zeitliche Abstand zwischen der Betätigung des Fahrpedals durch den Fahrer zur Initiierung des Anfahrvorgangs und dem Bewegungsbeginn des Fahrzeugs ermittelt wird und
- der spätere Abbau des erhöhten Bremsdrucks abhängig vom ermittelten zeitlichen Abstand erfolgt.

## Claims

**1.** Method for brake control in a vehicle during a driving-off process on a µ-split carriageway, in the case of which

- the occurrence of a driving-off process on a µ-split carriageway having a side with a high coefficient of friction and a side with a low coefficient of friction is detected (200), and
- as a consequence thereof the brake pressure (P_Highrad) is increased (201) at a driven wheel on the side of the vehicle which has a high coefficient of friction,

**characterized in that** the brake pressure

- is increased by a first constant value (P_Highrad) when the parking brake is not actuated by the driver, and
- is additionally increased by a second constant value (P_HasOffset) when the parking brake is actuated by the driver, and

**in that** the later reduction of the increased brake pressure (P_Highrad) is a function of whether the µ-split carriageway is inclined upwards (α) in the vehicle longitudinal direction.

**2.** Method according to Claim 1, **characterized in that**

- the time interval between the actuation of the accelerator pedal by the driver in order to initiate the driving-off process and the start of movement of the vehicle is determined, and
- the later reduction of the increased brake pressure is performed as a function of the time interval determined.

**3.** Device for brake control in a vehicle during a driving-off process on a µ-split carriageway, which includes

- detection means (301) which are designed for detecting the occurrence of a driving-off process on a µ-split carriageway having a side with a high coefficient of friction and a side with a low coefficient of friction, and
- brake pressure increasing means (302) which are designed to increase the brake pressure at a driven wheel on the side of the vehicle which has a high coefficient of friction as a consequence of an occurrence, detected by the detection means, of a driving-off process on a µ-split carriageway having a side with a high coefficient of friction and a side with a low coefficient of friction,

**characterized in that** the brake pressure

- is increased by a first constant value (P_Highrad) when the parking brake is not actuated by the driver, and
- is additionally increased by a second constant value (P_HasOffset) when the parking brake is actuated by the driver, and **in that** the later reduction of the increased brake pressure (P_Highrad) is a function of whether the µ-split carriageway is inclined upwards (α) in the vehicle longitudinal direction.

**4.** Device according to Claim 3, **characterized in that**

- the time interval between the actuation of the accelerator pedal by the driver in order to initiate the driving-off process and the start of movement of the vehicle is determined, and
- the later reduction of the increased brake pressure is performed as a function of the time interval determined.

**Revendications**

**1.** Procédé de régulation du freinage d'un véhicule pendant une opération de démarrage sur une bande de circulation dite "µ-Split", dans lequel

- la présence d'une opération de démarrage sur une bande de circulation "µ-Split", c'est-à-dire qui présente un côté à haut coefficient de frottement et un côté à bas coefficient de frottement, est détectée (200) et
- en conséquence, la pression de freinage (P_Highrad) sur la roue motrice située sur le côté à haut coefficient de frottement du véhicule est augmentée (201),

**caractérisé en ce que**
la pression de freinage

- est augmentée d'une première valeur constante (P_Highrad) lorsque le frein de stationnement n'a pas été actionné par le conducteur et
- est augmentée en supplément d'une deuxième valeur constante (P_HasOffset) lorsque le frein de stationnement a été actionné par le conducteur et

**en ce que** la diminution ultérieure de la pression de freinage accrue (P_Highrad) dépend de l'angle (α) d'inclinaison vers l'avant de la bande de circulation µ-Split dans le sens de la longueur du véhicule.

**2.** Procédé selon la revendication 1, **caractérisé en ce que** l'écart temporel entre l'actionnement de la pédale de frein par le conducteur pour lancer l'opération de démarrage et le début du déplacement du véhicule est déterminé et **en ce que** la diminution ultérieure de la pression accrue de freinage est réalisée en fonction de l'écart temporel déterminé.

**3.** Dispositif de régulation du freinage d'un véhicule pendant une opération de démarrage sur une bande de circulation µ-Split, qui présente

- des moyens de détection (301) qui sont configurés pour détecter la présence d'une opération de démarrage sur une bande de circulation µ-Split qui présente un côté à haut coefficient de frottement et un côté à bas coefficient de frottement,

- des moyens (302) d'augmentation de la pression de freinage qui sont configurés pour augmenter la pression de freinage sur la roue motrice située sur le côté à haut coefficient de frottement du véhicule suite à la présence, détectée par les moyens de détection, d'une opération de démarrage sur une bande de circulation μ-Split qui présente un côté à haut coefficient de frottement et un côté à bas coefficient de frottement,

**caractérisé en ce que**

la pression de freinage est augmentée d'une première valeur constante (P_Highrad) si le frein de stationnement n'a pas été actionné par le conducteur,

**en ce qu'**en plus, elle est augmentée d'une deuxième valeur constante (P_HasOffset) si le frein de stationnement a été actionné par le conducteur et

**en ce que** la diminution ultérieure de la pression accrue de freinage (P_Highrad) dépend de la pente ($\alpha$) d'inclinaison vers l'avant de la bande de circulation μ-Split dans le sens de la longueur du véhicule.

4. Dispositif selon la revendication 3, **caractérisé en ce que** l'écart temporel entre l'actionnement de la pédale de frein par le conducteur en vue de lancer l'opération de démarrage et le début du déplacement du véhicule est déterminé et **en ce que** la diminution ultérieure de la pression accrue de freinage est réalisée en fonction de l'écart temporel déterminé.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002145034 A
- DE 10053608 A1
- DE 19933085 A1
- DE 19909326 A1